# EUROPEAN PATENT SPECIFICATION

(11) **EP 2 963 652 B1**
(45) Date of publication and mention of the grant of the patent: **13.09.2017**
(21) Application number: 15175077.5
(22) Date of filing: 02.07.2015
(51) Int. Cl.: G21C 17/022, B05D 3/02, C09D 1/00, C23C 24/00, C23C 26/00, G21C 21/00, G21C 21/18, C23C 24/08, G21C 19/00

(54) **METHOD OF COATING A NUCLEAR REACTOR COMPONENT WITH A COLLOIDAL SOLUTION**
VERFAHREN ZUR BESCHICHTUNG EINER KERNREAKTORKOMPONENTE MIT EINER KOLLOIDLÖSUNG
PROCÉDÉ DE REVÊTEMENT D'UN COMPOSANT DE RÉACTEUR NUCLÉAIRE AVEC UNE SOLUTION COLLOÏDALE

(30) Priority: 03.07.2014 US 201414323506
(43) Date of publication of application: 06.01.2016
(73) Proprietor: Global Nuclear Fuel-Americas, LLC, Wilmington, North Carolina 28401 (US)
(72) Inventor: LIN, Yang-Pi, Wilmington, NC 28401 (US); KIM, Young Jin, Wilmington, NC 28401 (US); WHITE, David William, Wilmington, NC 28401 (US); NAVE, Garrett Scott, Wilmington, NC 28401 (US); MCCUMBEE, Patricia, Wilmington, NC 28401 (US)
(74) Representative: Foster, Christopher Michael

(56) References cited:
- EP-A1- 1 847 633
- WO-A1-2013/091685
- US-A1- 2012 315 496

## Description

### BACKGROUND

### FIELD

The present disclosure relates to methods of coating a nuclear reactor component so as to reduce or prevent corrosion. The coating of the nuclear reactor component involves a colloidal approach.

### DESCRIPTION OF RELATED ART

During the operation of a nuclear reactor, various components therein may experience corrosion over time. The corrosion may be in the form of shadow corrosion, which may result in fuel failure. To protect the components within the nuclear reactor that are vulnerable to corrosion, conventional approaches have been used to deposit a protective layer on such components. Typical deposition processes include, for instance, chemical vapor deposition (CVD). However, although a viable approach, forming a protective layer by chemical vapor deposition (CVD) can involve relatively high production costs.

US 2012/0315496 A1 relates to a method of forming an oxide coating that reduces accumulation of radioactive species on a metallic source.

### BRIEF DESCRIPTION

A method of coating a nuclear reactor component includes introducing the nuclear reactor component into a colloidal solution at a first rate to obtain an immersed component. The colloidal solution is a non-crosslinked mixture including a dispersed phase within a dispersion medium. The dispersed phase may include n-type metal oxide particles. The method additionally includes removing the immersed component from the colloidal solution at a second rate to obtain a wet component. The method also includes drying the wet component to obtain a dried component. The method further includes baking the dried component to obtain a coated component. The colloidal solution has a pH ranging from 2 to 3.

### BRIEF DESCRIPTION OF THE DRAWINGS

The various features and advantages of the non-limiting embodiments herein may become more apparent upon review of the detailed description in conjunction with the accompanying drawings. The accompanying drawings are merely provided for illustrative purposes and should not be interpreted to limit the scope of the claims. The accompanying drawings are not to be considered as drawn to scale unless explicitly noted. For purposes of clarity, various dimensions of the drawings may have been exaggerated.
FIG. 1 is a scanning electron microscope (SEM) image of a coated component with a relatively uniform coating based on the baking/annealing temperature according to an example embodiment.
FIG. 2 is a scanning electron microscope image of a coated component with a non-uniform coating based on the baking/annealing temperature according to a comparative embodiment.
FIG. 3 is a scanning electron microscope image of a coated component with a relatively uniform coating based on the drying time and heat up rate according to an example embodiment.
FIG. 4 is a scanning electron microscope image of a coated component with a non-uniform coating based on the drying time and heat up rate according to a comparative embodiment.

### DETAILED DESCRIPTION

It should be understood that when an element or layer is referred to as being "on," "connected to," "coupled to," or "covering" another element or layer, it may be directly on, connected to, coupled to, or covering the other element or layer or intervening elements or layers may be present. In contrast, when an element is referred to as being "directly on," "directly connected to," or "directly coupled to" another element or layer, there are no intervening elements or layers present. Like numbers refer to like elements throughout the specification. As used herein, the term "and/or" includes any and all combinations of one or more of the associated listed items.

It should be understood that, although the terms first, second, third, etc. may be used herein to describe various elements, components, regions, layers and/or sections, these elements, components, regions, layers, and/or sections should not be limited by these terms. These terms are only used to distinguish one element, component, region, layer, or section from another region, layer, or section. Thus, a first element, component, region, layer, or section discussed below could be termed a second element, component, region, layer, or section without departing from the teachings of example embodiments.

Spatially relative terms (e.g., "beneath," "below," "lower," "above," "upper," and the like) may be used herein for ease of description to describe one element or feature's relationship to another element(s) or feature(s) as illustrated in the figures. It should be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the term "below" may encompass both an orientation of above and below. The device may be otherwise oriented (rotated 90 degrees or at other orientations) and the spatially relative descriptors used herein interpreted accordingly.

The terminology used herein is for the purpose of describing various embodiments only and is not intended to be limiting of example embodiments. As used herein, the singular forms "a," "an," and "the" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

Example embodiments are described herein with reference to cross-sectional illustrations that are schematic illustrations of idealized embodiments (and intermediate structures) of example embodiments. As such, variations from the shapes of the illustrations as a result, for example, of manufacturing techniques and/or tolerances, are to be expected. Thus, example embodiments should not be construed as limited to the shapes of regions illustrated herein but are to include deviations in shapes that result, for example, from manufacturing. For example, an implanted region illustrated as a rectangle will, typically, have rounded or curved features and/or a gradient of implant concentration at its edges rather than a binary change from implanted to non-implanted region. Likewise, a buried region formed by implantation may result in some implantation in the region between the buried region and the surface through which the implantation takes place. Thus, the regions illustrated in the figures are schematic in nature and their shapes are not intended to illustrate the actual shape of a region of a device and are not intended to limit the scope of example embodiments.

Unless otherwise defined, all terms (including technical and scientific terms) used herein have the same meaning as commonly understood by one of ordinary skill in the art to which example embodiments belong. It will be further understood that terms, including those defined in commonly used dictionaries, should be interpreted as having a meaning that is consistent with their meaning in the context of the relevant art and will not be interpreted in an idealized or overly formal sense unless expressly so defined herein.

According to the present disclosure, a protective layer is formed on a nuclear reactor component by utilizing a colloidal approach.

According to the invention, a method of coating a nuclear reactor component includes introducing the nuclear reactor component into a colloidal solution. The nuclear reactor component may be a boiling water reactor (BWR) component, although example embodiments are not limited thereto. For instance, the nuclear reactor component may be a part of a fuel assembly (e.g., spacer, tie plate, control blade). The nuclear reactor component may also be formed of an iron-chromium-based alloy (e.g., stainless steel) or a nickel-chromium-based alloy (e.g., Inconel).

The colloidal solution is a non-crosslinked mixture including a dispersed phase within a dispersion medium. In particular, the non-crosslinked mixture neither includes a polymer network nor cross-linkable precursors that would form a polymer network at a later time. The colloidal solution is a stable system wherein the dispersed phase (e.g., solid particles) remains suspended within the dispersion medium (e.g., liquid). Being a stable system, the dispersed phase neither aggregate nor settle (or, conversely, float) in the dispersion medium. Instead, the colloidal solution is such that Brownian forces have a greater effect on the dispersed phase than gravitational forces, thereby keeping the dispersed phase suspended in the dispersion medium.

In an example, the dispersed phase includes n-type metal oxide particles. For instance, the n-type metal oxide particles may be n-type transition metal oxide particles. In a non-limiting embodiment, the n-type transition metal oxide particles may include at least one of TiO₂, Fe₂O₃, Cr₂O₃, ZrO₂, WO₃, ZnO, Ta₂O₃, MoO₃, and V₂O₃. The n-type metal oxide particles have an average size of less than 200 nm. For instance, the n-type metal oxide particles have an average size of less than 100 nm (e.g., less than 50 nm). The n-type metal oxide particles may also be of relatively high purity. For instance, the total amount of impurities within the n-type metal oxide particles may be less than 1% (e.g., less than 0.3%). The n-type metal oxide particles are present at a concentration of 5 to 35 % based on a total weight of the colloidal solution.

The dispersion medium may be a water-based liquid. For instance, the dispersion medium may be an aqueous solution including a stabilizing agent. The stabilizing agent may be an acid, such as [2-(2-Methoxyethoxy)ethoxy]acetic acid, to prevent coagulation of the dispersed phase, although example embodiments are not limited thereto. The colloidal solution has a pH ranging from 2 to 3 (e.g., 2.3 to 2.8) for the example of [2-(2-Methoxyethoxy)ethoxy]acetic acid.

The nuclear reactor component is introduced into the colloidal solution at a first rate to obtain an immersed component. For instance, the introducing may include immersing the nuclear reactor component at a speed of 12.7 to 76.2 mm/minute (0.5 to 3 inches/minute) as the first rate. The immersed component may be maintained (e.g., completely submerged) in the colloidal solution for 1 to 200 minutes (e.g., 45 to 75 minutes).

The method additionally includes removing the immersed component from the colloidal solution at a second rate to obtain a wet component. The removing may include withdrawing the immersed component at a speed of 12.7 to 76.2 mm/minute (0.5 to 3 inches/minute) as the second rate.

The method also includes drying the wet component to obtain a dried component. The drying is performed for 30 to 300 minutes (e.g., 60 to 180 minutes). The wet component may be dried in air, although example embodiments are not limited thereto.

The method further includes baking (or annealing) the dried component to obtain a coated component. The baking may occur in a furnace. The baking is performed at a target temperature ranging from 300 to 700 degrees Celsius (e.g., 400 to 600 degrees Celsius) for densification of the particles into a coating layer. As a result, a thin layer of TiO₂, for example, may be coated on the nuclear reactor component. For instance, in terms of a thin layer, the weight gain for a coated component (e.g., spacer) with a surface area of about 2000 cm² may be about 0.05 to 1.5 grams (e.g., about 1 gram), although example embodiments are not limited thereto. Furthermore, the resulting coating has a different appearance (e.g., transparent) compared to a conventional layer prepared by, for instance, chemical vapor deposition (CVD).

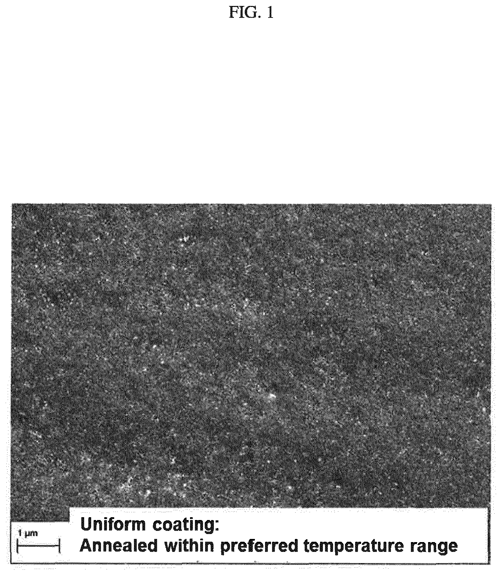

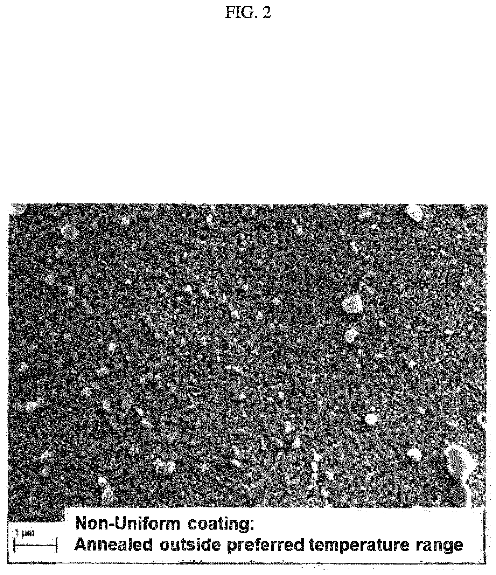

When the baking takes place between 300 to 700 degrees Celsius, a coated component with a relatively uniform coating may be obtained. FIG. 1 is a scanning electron microscope (SEM) image of a coated component with a relatively uniform coating based on the baking/annealing temperature according to an example embodiment. In contrast, when the baking does not take place between 300 to 700 degrees Celsius, a coated component with a non-uniform coating results. FIG. 2 is a scanning electron microscope image of a coated component with a non-uniform coating based on the baking/annealing temperature according to a comparative embodiment.

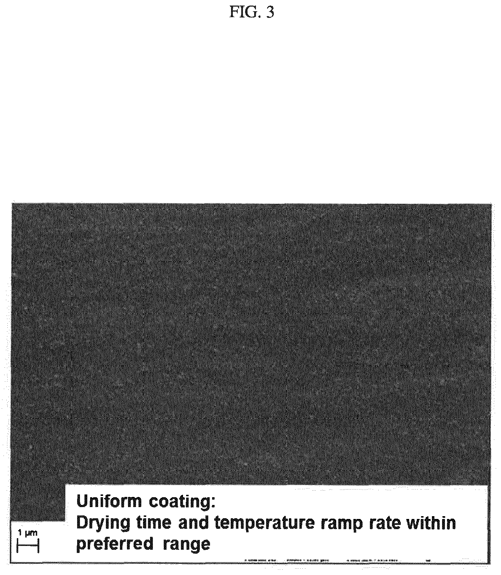

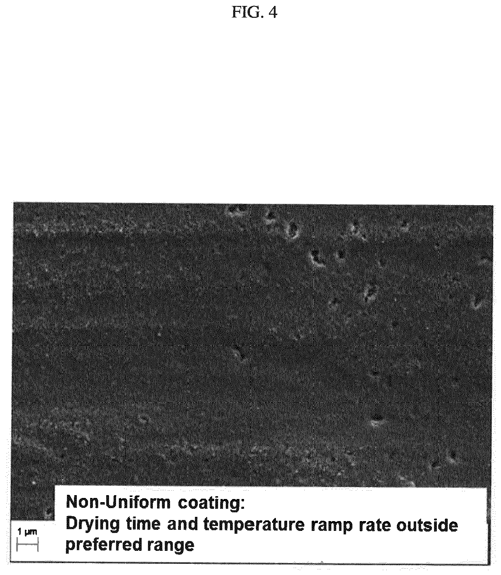

The baking includes heating up to the target temperature at a heat up rate of 1 to 20 degrees Celsius per minute (e.g., 8 to 12 degrees Celsius per minute). The dried component may be subjected to the target temperature for 15 to 300 minutes (e.g., 30 to 120 minutes). A heat up rate between 1 to 20 degrees Celsius per minute helps to provide a resulting coated component with a relatively uniform coating. A drying time of 30 to 300 minutes prior to the baking also helps to provide a resulting coated component with a more uniform coating. FIG. 3 is a scanning electron microscope image of a coated component with a relatively uniform coating based on the drying time and heat up rate according to an example embodiment. In contrast, when the drying time is not between 30 to 300 minutes prior to the baking and/or the heat up rate is not between 1 to 20 degrees Celsius per minute, a coated component with a non-uniform coating results. FIG. 4 is a scanning electron microscope image of a coated component with a non-uniform coating based on the drying time and heat up rate according to a comparative embodiment.

As discussed herein, nuclear reactor components may be coated with a protective layer in a relatively economical and reliable manner to reduce or prevent the occurrence of corrosion (e.g., shadow corrosion). The protective layer may also reduce or prevent erosion of the nuclear reactor component. In particular, erosion may present radiation dose issues in terms of cobalt (Co) release. In such situations, if erosion cannot be mitigated, then the potential materials for a component may be limited to those with relatively low amounts of cobalt in order to comply with radiation dose requirements. However, because components may be provided with a protective layer in a relatively economical and reliable manner with the present coating methods, materials with a higher cobalt content (e.g., Inconel, stainless steel) may be used since erosion can be reduced or prevented, thereby avoiding the radiation dose issues previously associated with unprotected components.

While a number of example embodiments have been disclosed herein, it should be understood that other variations may be possible. Such variations are not to be regarded as a departure from the scope of the present disclosure, and all such modifications as would be obvious to one skilled in the art are intended to be included within the scope of the invention, which is defined in the appended claims.

## Claims

1. A method of coating a nuclear reactor component, comprising:
introducing the nuclear reactor component into a colloidal solution at a first rate to obtain an immersed component, the colloidal solution being a non-crosslinked mixture including a dispersed phase within a dispersion medium, the dispersed phase including n-type metal oxide particles;
removing the immersed component from the colloidal solution at a second rate to obtain a wet component;
drying the wet component to obtain a dried component; and
baking the dried component to obtain a coated component;
**characterized in that**:
the colloidal solution has a pH ranging from 2 to 3.

2. The method of claim 1, wherein the nuclear reactor component is a boiling water reactor (BWR) component.

3. The method of either of claim 1 or 2, wherein the nuclear reactor component is formed of an iron-chromium-based alloy or a nickel-chromium-based alloy.

4. The method of any preceding claim, wherein the n-type metal oxide particles are n-type transition metal oxide particles.

5. The method of claim 4, wherein the n-type transition metal oxide particles include at least one of TiO₂, Fe₂O₃, Cr₂O₃, ZrO₂, WO₃, ZnO, Ta₂O₃, MoO₃, and V₂O₃.

6. The method of any preceding claim, wherein the n-type metal oxide particles have an average size of less than 200 nm.

7. The method of any preceding claim, wherein the n-type metal oxide particles are present at a concentration of 5 to 35 % based on a total weight of the colloidal solution.

8. The method of any preceding claim, wherein the introducing includes immersing the nuclear reactor component at a speed of 12.7 to 76.2 mm/minute (0.5 to 3 inches/minute) as the first rate.

9. The method of any preceding claim, wherein the introducing includes maintaining the immersed component in the colloidal solution for 1 to 200 minutes.

10. The method of any preceding claim, wherein the removing includes withdrawing the immersed component at a speed of 12.7 to 76.2 mm/minute (0.5 to 3 inches/minute) as the second rate.

11. The method of any preceding claim, wherein the drying is performed for 30 to 300 minutes.

12. The method of any preceding claim, wherein the baking is performed at a target temperature ranging from 300 to 700 degrees Celsius.

13. The method of claim 12, wherein the baking includes subjecting the dried component to the target temperature for 15 to 300 minutes.

14. The method of either of claim 12 or 13, wherein the baking includes heating up to the target temperature at a heat up rate of 1 to 20 degrees Celsius per minute.

## Patentansprüche

1. Verfahren zur Beschichtung einer Kernreaktorkomponente, umfassend:
Einführen der Kernreaktorkomponente in eine kolloidale Lösung mit einer ersten Rate, um eine eingetauchte Komponente zu erhalten, wobei die kolloidale Lösung eine nichtvernetzte Mischung ist, die eine dispergierte Phase innerhalb eines Dispersionsmediums beinhaltet, wobei die dispergierte Phase Metalloxidpartikel vom n-Typ beinhaltet;
Entfernen der eingetauchten Komponente aus der kolloidalen Lösung mit einer zweiten Rate, um eine nasse Komponente zu erhalten;
Trocknen der nassen Komponente, um eine getrocknete Komponente zu erhalten; und
Brennen der getrockneten Komponente, um eine beschichtete Komponente zu erhalten;
**dadurch gekennzeichnet, dass**
die kolloidale Lösung einen pH-Wert im Bereich von 2 bis 3 aufweist.

2. Verfahren nach Anspruch 1, wobei die Kernreaktorkomponente eine Siedewasserreaktor(SWR)-Komponente ist.

3. Verfahren nach Anspruch 1 oder 2, wobei die Kernreaktorkomponente aus einer auf Eisen-Chrom basierten Legierung oder einer auf Nickel-Chrom basierten Legierung gebildet wird.

4. Verfahren nach einem vorhergehenden Anspruch, wobei die Metalloxidpartikel vom n-Typ Übergangsmetalloxidpartikel vom n-Typ sind.

5. Verfahren nach Anspruch 4, wobei die Übergangsmetalloxidpartikel vom n-Typ mindestens einen von TiO₂, Fe₂O₃, Cr₂O₃, ZrO₂, WO₃, ZnO, Ta₂O₃, MoO₃ und V₂O₃ beinhalten.

6. Verfahren nach einem vorhergehenden Anspruch, wobei die Metalloxidpartikel vom n-Typ eine durchschnittliche Größe von weniger als 200 nm aufweisen.

7. Verfahren nach einem vorhergehenden Anspruch, wobei die Metalloxidpartikel vom n-Typ in einer Konzentration von 5 bis 35% basierend auf einem Gesamtgewicht der kolloidalen Lösung vorliegen.

8. Verfahren nach einem vorhergehenden Anspruch, wobei das Einführen ein Eintauchen der Kernreaktorkomponente mit einer Geschwindigkeit von 12,7 bis 76,2 mm/Minute (0,5 bis 3 Zoll/Minute) als erste Rate beinhaltet.

9. Verfahren nach einem vorhergehenden Anspruch, wobei das Einführen ein Halten der eingetauchten Komponente in der kolloidalen Lösung um 1 bis 200 Minuten beinhaltet.

10. Verfahren nach einem vorhergehenden Anspruch, wobei das Entfernen ein Herausziehen der eingetauchten Komponente mit einer Geschwindigkeit von 12,7 bis 76,2 mm/Minute (0,5 bis 3 Zoll/Mpnute) als zweite Rate beinhaltet.

11. Verfahren nach einem vorhergehenden Anspruch, wobei das Trocken 30 bis 300 Minuten lang durchgeführt wird.

12. Verfahren nach einem vorhergehenden Anspruch, wobei das Brennen bei einer Zieltemperatur im Bereich von 300 bis 700 Grad Celsius durchgeführt wird.

13. Verfahren nach Anspruch 12, wobei das Brennen ein 15 bis 300 Minuten langes Beaufschlagen der getrockneten Komponente mit der Zieltemperatur beinhaltet.

14. Verfahren nach Anspruch 12 oder 13, wobei das Brennen ein Erwärmen auf die Zieltemperatur mit einer Erwärmungstemperaturrate von 1 bis 20 Grad Celsius pro Minute beinhaltet.

## Revendications

1. Procédé de revêtement d'un composant de réacteur nucléaire, comprenant :
l'introduction du composant de réacteur nucléaire dans une solution colloïdale à une première vitesse pour obtenir un composant immergé, la solution colloïdale étant un mélange non réticulé comportant une phase dispersée à l'intérieur d'un milieu de dispersion, la phase dispersée comportant des particules d'oxyde métallique de type n ;
le retrait du composant immergé de la solution colloïdale à une deuxième vitesse pour obtenir un composant humide ;
le séchage du composant humide pour obtenir un composant séché ; et
la cuisson du composant séché pour obtenir un composant revêtu ;
**caractérisé en ce que** :
la solution colloïdale a un pH allant de 2 à 3.

2. Procédé de la revendication 1, dans lequel le composant de réacteur nucléaire est un composant de réacteur à eau bouillante (REB).

3. Procédé de la revendication 1 ou 2, dans lequel le composant de réacteur nucléaire est constitué d'un alliage à base de fer-chrome ou d'un alliage à base de nickel-chrome.

4. Procédé d'une quelconque revendication précédente, dans lequel les particules d'oxyde métallique de type n sont des particules d'oxyde de métal de transition de type n.

5. Procédé de la revendication 4, dans lequel les particules d'oxyde de métal de transition de type n comportent au moins un composé parmi TiO₂, Fe₂O₃, Cr₂O₃, ZrO₂, WO₃, ZnO, Ta₂O₃, MoO₃, et V₂O₃.

6. Procédé d'une quelconque revendication précédente, dans lequel les particules d'oxyde métallique de type n ont une taille moyenne de moins de 200 nm.

7. Procédé d'une quelconque revendication précédente, dans lequel les particules d'oxyde métallique de type n sont présentes à une concentration de 5 à 35 %, rapporté à un poids total de la solution colloïdale.

8. Procédé d'une quelconque revendication précédente, dans lequel l'introduction comporte l'immersion du composant de réacteur nucléaire à une vitesse de 12,7 à 76,2 mm/minute (0,5 à 3 pouces/minute) comme première vitesse.

9. Procédé d'une quelconque revendication précédente, dans lequel l'introduction comporte le maintien du composant immergé dans la solution colloïdale pendant 1 à 200 minutes.

10. Procédé d'une quelconque revendication précédente, dans lequel le retrait comporte l'extraction du composant immergé à une vitesse de 12,7 à 76,2 mm/minute (0,5 à 3 pouces/minute) comme deuxième vitesse.

11. Procédé d'une quelconque revendication précédente, dans lequel le séchage est effectué pendant 30 à 300 minutes.

12. Procédé d'une quelconque revendication précédente, dans lequel la cuisson est effectuée à une température cible allant de 300 à 700 degrés Celsius.

13. Procédé de la revendication 12, dans lequel la cuisson comporte la soumission du composant séché à la température cible pendant 15 à 300 minutes.

14. Procédé de la revendication 12 ou 13, dans lequel la cuisson comporte un chauffage jusqu'à la température cible à une vitesse de chauffe de 1 à 20 degrés Celsius par minute.
